# EUROPEAN PATENT APPLICATION

(11) **EP 0 770 986 A2**
(43) Date of publication of application: **02.05.1997**
(21) Application number: 96307825.8
(22) Date of filing: 28.10.1996
(51) Int. Cl.: G10L 5/06

(54) **Modified discrete word recognition**

(30) Priority: 26.10.1995 US 547716
(71) Applicant: DRAGON SYSTEMS INC., Newton, MA 01260 (US)
(72) Inventor: Roberts, Jed M., Newton, Massachusetts 02161 (US); Surtevant, Dean G., Waltham, Massachusetts 02154 (US); Crainic, Stephane, Chestnut Hill, Massachusetts 02167 (US)
(74) Representative: Deans, Michael John Percy

(57) **Abstract**

Speech frames of a user utterance, that includes a plurality of speech elements, are compared to speech models; upon the occurrence of a predetermined condition best candidate speech elements are determined for the utterance by matching speech frames associated with the speech elements to speech models. At times when the speaker separates successive speech elements by pauses longer than a predetermined threshold, discrete speech element recognition is performed on each user utterance; and at other times, more than one speech element is recognized in each user utterance. The user's speech is divided into utterances based on intervening first predetermined conditions appearing between successive utterances; and the utterances are subdivided into speech elements based on a second predetermined condition appearing between successive speech elements. Speech recognition results are delivered based on discrete speech recognition of user utterances including single speech elements and modified discrete speech recognition of user utterances including multiple speech elements.

## Description

This invention relates to modified discrete word recognition.

Discrete word recognition systems require users to pause after each spoken word (including predetermined phrases, i.e., a group of words treated as a single word). Pausing after each utterance limits the speed (i.e., words per minute) at which a user may speak. Each user utterance is recognized as one word (or one phrase) by comparing the utterance to speech models representing possible words (and phrases). If the user does not pause between two words and these two words do not make up a predetermined phrase, then the recognition system may fail to recognize the utterance, recognize only the first word and ignore the second word, or recognize the combination of the two words as a different word or phrase (e.g., "six teens" may become "sixteen").

In general, in one aspect, the invention features modified discrete word recognition which is done by comparing speech frames of a user utterance, that includes a plurality of speech elements, to speech models; and upon the occurrence of a predetermined condition, determining, for the utterance, best candidate speech elements by matching speech frames associated with the speech elements to speech models.

Implementations of the invention may include one or more of the following features. Any remaining speech frames of the user utterance may be compared to speech models. Upon another occurrence of the predetermined condition, the next best candidate speech elements may be determined, for the utterance, by matching remaining speech frames associated with the speech elements to speech models. The comparing and determining may be repeated until all of the speech frames in the user utterance representing speech have been compared to speech models. Before the comparing is done, it may be determined whether any remaining speech frames in the user utterance represent speech. If so, the comparing and determining are done. The predetermined condition may be met if a predetermined number of consecutive speech frames match an end node speech model.

In general, in another aspect, the invention features modified discrete word recognition in which, at times when the speaker separates successive speech elements by pauses longer than a predetermined threshold, discrete speech element recognition is performed on each user utterance; and at other times, more than one speech element is recognized in each user utterance.

Implementations of the invention may include one or more of the following. The recognizing may include comparing speech frames of each user utterance to speech models; and upon the occurrence of a predetermined condition, determining, for each utterance, best candidate speech elements by matching speech frames associated with the speech elements to speech models. A determination may be made whether there are any remaining speech frames in the user utterance and whether any remaining speech frames represent speech, and if any remaining speech frames are determined to represent speech, then the remaining speech frames of the user utterance may be compared to -speech models; and upon another occurrence of the predetermined condition, a determination may be made, for the utterance, of what are the next best candidate speech elements by matching remaining speech frames associated with the speech elements to speech models. The comparing and determining may be repeated until all of the speech frames in the user utterance representing speech have been compared to speech models. The predetermined condition may be met if a predetermined number of consecutive speech frames match an end node speech model.

In general, in another aspect, the invention features modified discrete word recognition, in which a user's speech is divided into utterances based on intervening first predetermined conditions appearing between successive utterances; and the utterances are subdivided into speech elements based on a second predetermined condition appearing between successive speech elements.

Implementations of the invention may include one or more of the following. Modified discrete speech recognition may be performed on any subdivided utterances; and discrete speech recognition may be performed on any non-subdivided utterances. The first predetermined condition may be met if a first predetermined number of consecutive speech frames match an end node speech model. The second predetermined condition may be met if a second predetermined number of consecutive speech frames match an end node speech model. The speech elements may be words, or phrases.

In general, in another aspect, the invention features a modified discrete word recognizer that delivers speech recognition results based on discrete speech recognition of user utterances including single speech elements and modified discrete speech recognition of user utterances including multiple speech elements.

The advantages of the invention may include one or more of the following.

Recognizing a best candidate as a word that corresponds to one or more speech models which most closely match one or more speech frames in-a user utterance when a predetermined condition is met allows a discrete word recognition system to recognize multiple words in a single user utterance. This allows users to speak more quickly and improves recognition accuracy.

Other advantages and features will become apparent from the following description.

In the drawings:

Fig. 1 is a block diagram of a modified discrete word recognition system.

Fig. 2 is a schematic diagram of a speech packet and speech models.

Fig. 3 is a schematic diagram of a portion of a speech frame's parameters.

Fig. 4 is a schematic diagram of a portion of a speech model's dimensions.

Fig. 5 is a schematic diagram of the P(AMP) parameter of each speech frame in a speech packet.

Fig. 6 is a block diagram of the results passed to an application by a modified discrete word recognition system.

Typically, discrete word recognizers compare each speech frame of a user utterance (speech followed by a pause) to a vocabulary of speech models representing sounds that the user may speak. As the utterance is being recognized, the recognizer keeps a list of words corresponding to one or more speech models which at least partially match one or more speech frames in the utterance. The word list is ranked according to how closely the speech models corresponding to each listed word match the utterance, with the word having the most closely matching speech model or models (i.e., "best candidate") listed first. When the recognizer reaches the end of the utterance, the best candidate is "recognized" as the word spoken by the user.

For a more detailed description of discrete word recognition, see United States Patent No. 4,783,803, entitled "Speech Recognition Apparatus and Method", which is incorporated by reference.

A modified discrete word recognizer examines each user utterance for one or more words (or phrases). If the best candidate meets a predetermined condition, for example, the best candidate is followed by five speech frames substantially matching a silence speech model, then the modified discrete word recognizer recognizes the best candidate as at least one word spoken by the user within the utterance. The modified discrete word recognizer then examines the remaining speech frames in the utterance to determine if the remaining speech frames represent additional speech and, if so, compares the remaining speech frames to the speech models to recognize one or more other words in the utterance.

Using the predetermined condition as an indication that the best candidate is the word spoken by the user reduces the size of pauses required between spoken words. Five speech frames, e.g., 100 ms, of silence is typically much smaller than the pause, e.g., 250 ms, required between words for typical discrete word recognition. For example, a user may speak approximately 90 words per minute with a modified discrete word recognizer as opposed to only approximately 55-60 words per minute with a typical discrete word recognizer.

Additionally, a modified discrete word recognizer may increase speech recognition accuracy by recognizing words spoken too quickly for a typical discrete word recognizer to recognize. For example, if a user fails to pause, e.g., 250 ms, between two words, then the user utterance includes both words. A modified discrete word recognizer considers portions of the utterance to recognize both words within the utterance (provided the predetermined condition is met, e.g., 100 ms pause) but, because a typical discrete word recognizer considers the entire utterance, a typical discrete word recognizer cannot recognize both words within the utterance.

In effect, the modified discrete word recognizer operates in either of two modes, discrete or modified discrete, depending upon the length of silence between the user's spoken words. If the user inserts pauses sufficient for discrete word recognition, e.g., 250 ms, between spoken words, then each utterance includes only one word and the recognizer operates as a discrete word recognizer. On the other hand, if the user inserts only short pauses, e.g., 100 ms, between spoken words in a series of spoken words, then one utterance includes the series of spoken words and the recognizer operates as a modified discrete word recognizer. Thus, the user controls either deliberately or implicitely which mode the recognizer operates in simply by changing the length of the pauses inserted between spoken words.

The predetermined condition is an indication that the current best candidate probably represents the word spoken by the user. However, if the acoustics of the spoken word meet the predetermined condition before the entire word is considered, then the modified discrete word recognizer incorrectly recognizes the user's speech. For example, some words include internal silences: "seeks" and "speaks" include an internal silence between the "k" sound and the "s" sound. If the predetermined condition is five speech frames of silence and a word's internal silence is longer than five speech frames (100 ms), then the modified discrete word recognizer incorrectly recognizes the word spoken by the user because the speech frames corresponding to the entire word are not considered in determining the best candidate. Thus, the recognizer may provide higher recognition accuracy in discrete mode as opposed to modified discrete mode and the user may choose the level of accuracy by changing the length of the pauses between spoken words.

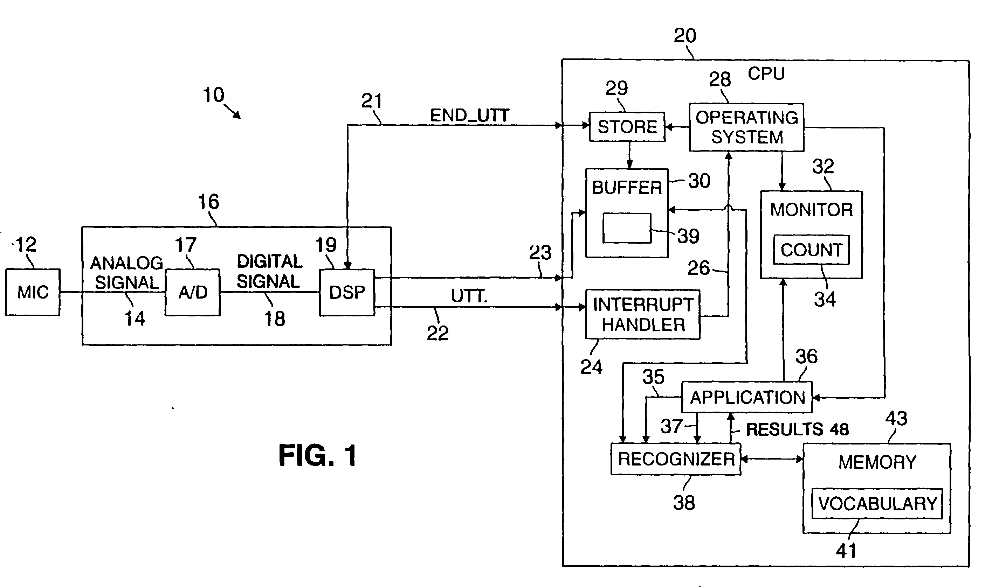

Referring to Fig. 1, a typical speech recognition system 10 includes a microphone 12 for converting a user's speech into an analog data signal 14 and a sound card 16. Sound card 16 includes a digital signal processor (DSP) 19 and an analog-to-digital (AID) converter 17 for converting the analog data signal into a digital data signal 18 by sampling the analog data signal at about 11 Khz to generate 220 digital samples during a 20 msec time period. Each 20 ms time period corresponds to a separate speech frame. The DSP processes the samples corresponding to each speech frame to generate a group of parameters associated with the analog data signal during the 20 ms period. Generally, the parameters represent the amplitude of the speech at each of a set of frequency bands.

The DSP also monitors the volume of the speech frames to detect user utterances. If the volume of three consecutive speech frames within a window of five consecutive speech frames (i.e., three of the last five speech frames) exceeds a predetermined speech threshold, for example, 20 dB, then the DSP determines that the analog signal represents speech and the DSP begins sending several, e.g., three, speech frames of data at a time (i.e., a batch) via a digital data signal 23 to a central processing unit (CPU) 20. The DSP asserts an utterance signal (Utt) 22 to notify the CPU each time a batch of speech frames representing an utterance is sent via the digital data signal.

When an interrupt handler 24 on the CPU receives assertions of Utt signal 22, the CPU's normal sequence of execution is interrupted. Interrupt signal 26 causes operating system software 28 to call a store routine 29. Store routine 29 stores the incoming batch of speech frames into a buffer 30. When fourteen consecutive speech frames within a window of nineteen consecutive speech frames fall below a predetermined silence threshold, e.g., 6 dB, then the DSP stops sending speech frames to the CPU and asserts an End_Utt signal 21. The End_Utt signal causes the store routine to organize the batches of previously stored speech frames into a speech packet 39 corresponding to the user utterance. Each speech frame has an associated time stamp, and the time stamp of the first speech frame of a speech packet establishes an utterance start time, while the time stamp of the last speech frame in the speech packet establishes an utterance end time.

Interrupt signal 26 also causes the operating system software to call monitor software 32. Monitor software 32 keeps a count 34 of the number of speech packets stored but not yet processed. An application 36, for example, a word processor, being executed by the CPU periodically checks for user input by examining the monitor software's count. If the count is zero, then there is no user input. If the count is not zero, then the application calls speech recognizer software 38 and passes a pointer 37 to the address location of the speech packet in buffer 30. The speech recognizer may be called directly by the application or may be called on behalf of the application by a separate program, such as DragonDictate™ from Dragon Systems™ of West Newton, Massachusetts, in response to the application's request for input from the mouse or keyboard.

For a more detailed description of how user utterances are received and stored within a speech recognition system, see United States Patent No. 5,027,406, entitled "Method for Interactive Speech Recognition and Training", which is incorporated by reference.

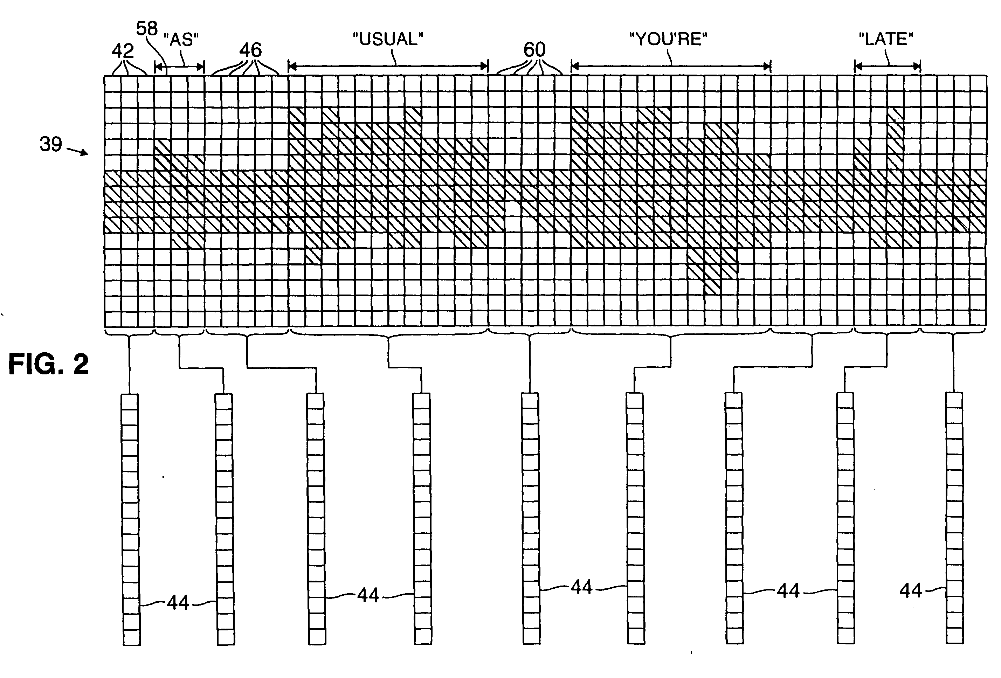

Referring to Fig. 2, when called, the speech recognizer retrieves a speech packet 39 or a portion of the speech packet (i.e., recognition may start before the entire speech packet is stored) from buffer 30. Speech packet 39 represents the utterance "As usual you're late." The speech recognizer then compares speech frames 42 to speech models 44 to determine the likelihood that particular speech frames correspond to particular speech models 44.

The speech models for continuous recognition are grouped in a vocabulary 41 (Fig. 1) stored in memory 43. Each speech model in the vocabulary is a multidimensional probability distribution, each dimension of which represents the probability distribution for the values of a given speech frame parameter if its associated speech frame belongs to the class of sounds represented by the speech model.

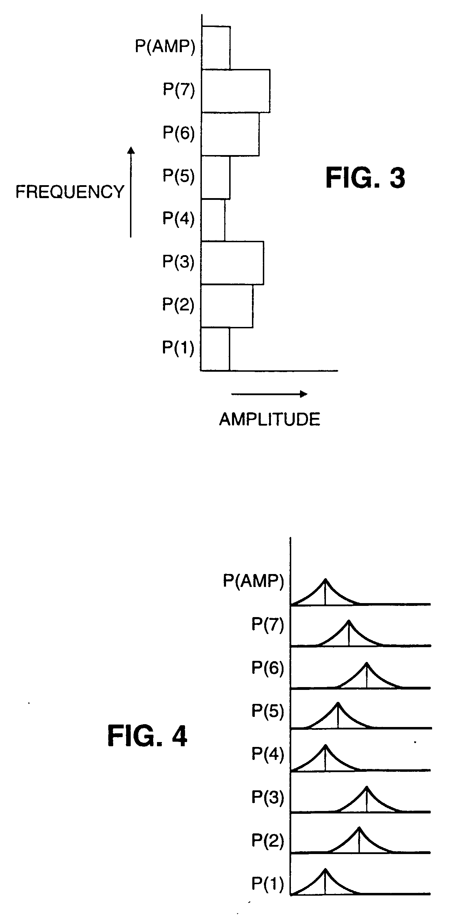

Referring to Fig. 3, each speech frame includes several, e.g., sixteen, parameter values P(1)-P(15) (only P(1)-P(7) are shown) and P(AMP) representing the analog signal's energy at each of sixteen frequency bands during the 20 ms associated with each frame. P(AMP) represents the total energy contained in all sixteen frequency bands, while P(1)-P(15) represent the energy in the fifteen lowest frequency bands. Referring to Fig. 4, each speech model is a sixteen dimensional probability distribution, having a separate dimension (only eight are shown) corresponding to each of the parameters of the speech frames.

Typically, a speech frame does not exactly match one speech model. As a result, the recognizer keeps a list of words (e.g., "As", "Assume", "Asterisk",...) represented by one or more speech models that at least partially match one or more of the speech frames (e.g., "As"). The recognizer ranks the word list according to how closely the speech models corresponding to each word match the speech frames, with the word corresponding to the closest matched speech model or models being first in the list and termed the "best candidate."

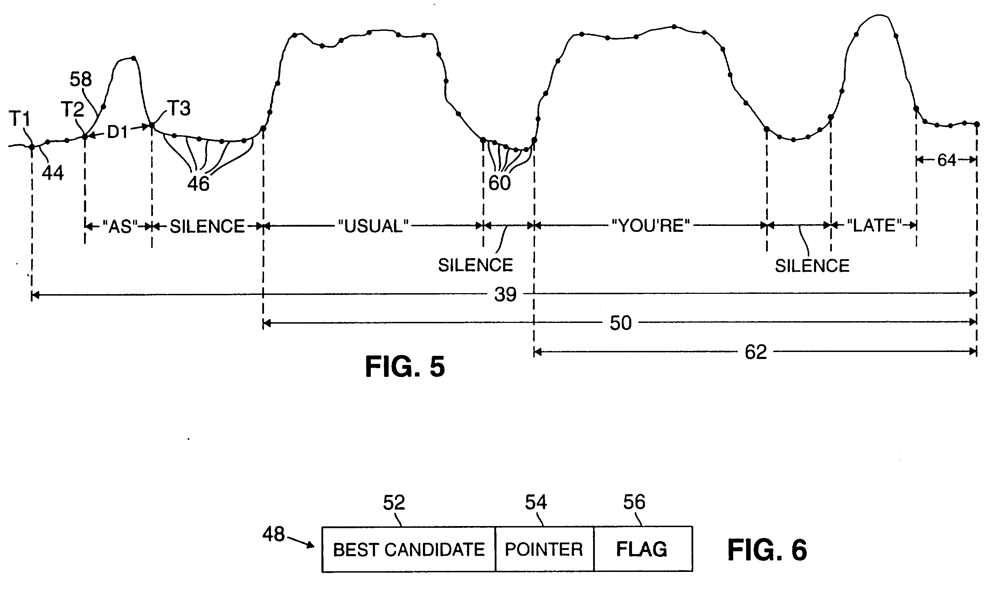

Referring to Fig. 5, when called, the speech recognizer retrieves a speech packet 39 (shown as an analog representation of the P(AMP) parameter of each speech frame 42) from buffer 30 (Fig. 1). Speech packet 39 represents the utterance "As usual you're late" with only 100 ms (five speech frames 46) of silence between "As" and "usual". After retrieving the packet from buffer 30, the speech recognizer begins analyzing speech frames 42 within the packet at a start time 35 (Fig. 1) passed to the recognizer by the application. The first time speech frames within the utterance are analyzed, the start time passed to the recognizer is equal to the time stamp T1 of the first speech frame 44 in the speech packet. The recognizer compares each speech frame 42 to speech models grouped in a vocabulary 41 (Fig. 1) stored in memory 43.

The recognizer ranks and re-ranks the word list according to how closely the speech models corresponding to each word match the speech frames until a predetermined condition is met. When the predetermined condition is met, the recognizer recognizes the current best candidate as at least one word spoken by the user in the utterance. The predetermined condition is, for example, a minimum number of, e.g., five, consecutive speech frames 46 (about 100 ms) which substantially match an end node speech model. The end node speech model represents silence (or background noise). If a minimum number of speech frames match the end node speech model, then the recognizer determines that the current best candidate, for example, "As," was the first word spoken by the user. The other words on the word list, e.g., "Assume," "Aside," "Astronaut," ..., are dropped because five speech frames of silence do not follow the beginning sound ("as") for those words.

The recognizer then scans the remainder 50 of speech packet 39 to determine if the remaining speech frames represent speech. If a minimum average amplitude across a consecutive number of, e.g., five, speech frames within the remaining speech frames is greater than a predetermined threshold, e.g., 20 dB, then the recognizer determines that the remaining speech frames represent speech. If the remaining speech frames do not represent speech, then the recognizer sends only the best candidate 52 (Fig. 6) to the application in results 48 (Figs. 1 and 6). If the remaining speech frames do represent speech, then the recognizer sends the best candidate 52, a pointer 54, and sets a "more speech is present" flag 56. The pointer is an address location in memory where the recognizer stores both the time stamp T2 (Fig. 5) of the first speech frame 58 corresponding to the best candidate and the duration D1 of the best candidate. From this information the application determines the end time T3 of the best candidate. Alternatively, the recognizer stores the end time T3 directly in the memory address location pointed to by the pointer.

If the more is present flag is set, then application 36 (Fig. 1) again calls recognizer 38 with a pointer to the same speech packet 39. This time, however, the application gives the recognizer a start time equal to the end time T3 of the previous best candidate, e.g., "As." The recognizer compares the remaining speech frames against the speech models, and again, the recognizer generates a word list and actively re-ranks the word list until the predetermined condition (e.g., five consecutive speech frames 60, Figs. 2 and 5, match the end node speech model, i.e., silence or background noise) is met.

The recognizer then checks the remaining speech frames 62 to determine if the remaining speech frames represent speech. In this example, the remaining speech frames do represent speech, thus, the recognizer again sends the best candidate 52, e.g., "usual", a pointer 54, and sets the "more speech is present" flag 56. Flag 56 again causes application 36 (Fig. 1) to re-call the recognizer. After separately recognizing "you're" and, later, "late" as best candidates, the recognizer determines that the remaining speech 64 does not represent speech, and the recognizer passes only the last best candidate, e.g., "late," as results 48, back to the application with the more is present flag cleared (i.e., not set).

When the application determines that the more is present flag is not set, the application checks the monitor 32 (Fig. 1) count 34 to determine if more speech packets have been stored in buffer 30. If count 34 is not zero, the application calls the recognizer and passes both a pointer to the next speech packet in the buffer and a start time equal to the time stamp of the first speech frame in the packet.

Other embodiments are feasible.

For example, instead of having a digital signal processor (DSP) process the samples corresponding to each speech frame to generate a group of parameters associated with the analog data signal during each 20 ms time period, the CPU includes front-end processing software that allows the CPU to generate the parameters.

The modified discrete word recognizer may be used to recognize continuous, connected, or discrete word speech. When a person speaks naturally (i.e., continuous speech), words within sentences typically run together which may cause "co-articulation." Co-articulation results when the sound of a word currently being spoken is affected by the sound of a word spoken just prior to the current word. Co-articulation increases the difficulty in recognizing continuous speech. The pauses required by discrete word recognition systems substantially prevent co-articulation. A user's speech is termed "connected speech" when the user speaks each word or phrase clearly but does not pause between the words or phrases. Clearly speaking the words reduces co-articulation. Thus, speech recognition accuracy is increased if the user speaks with connected speech.

### Pseudo-Code

Following is pseudo-code derived from C Programming Language Code that describes a process for modified discrete word recognition:

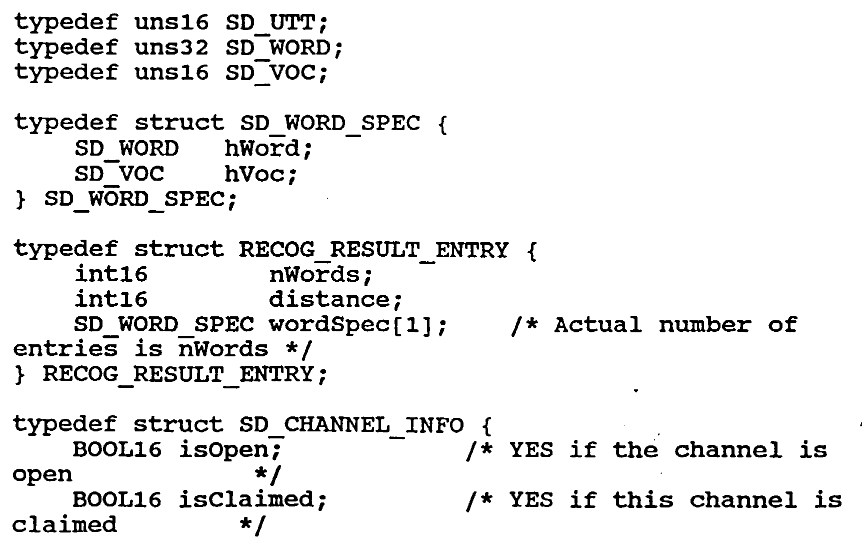

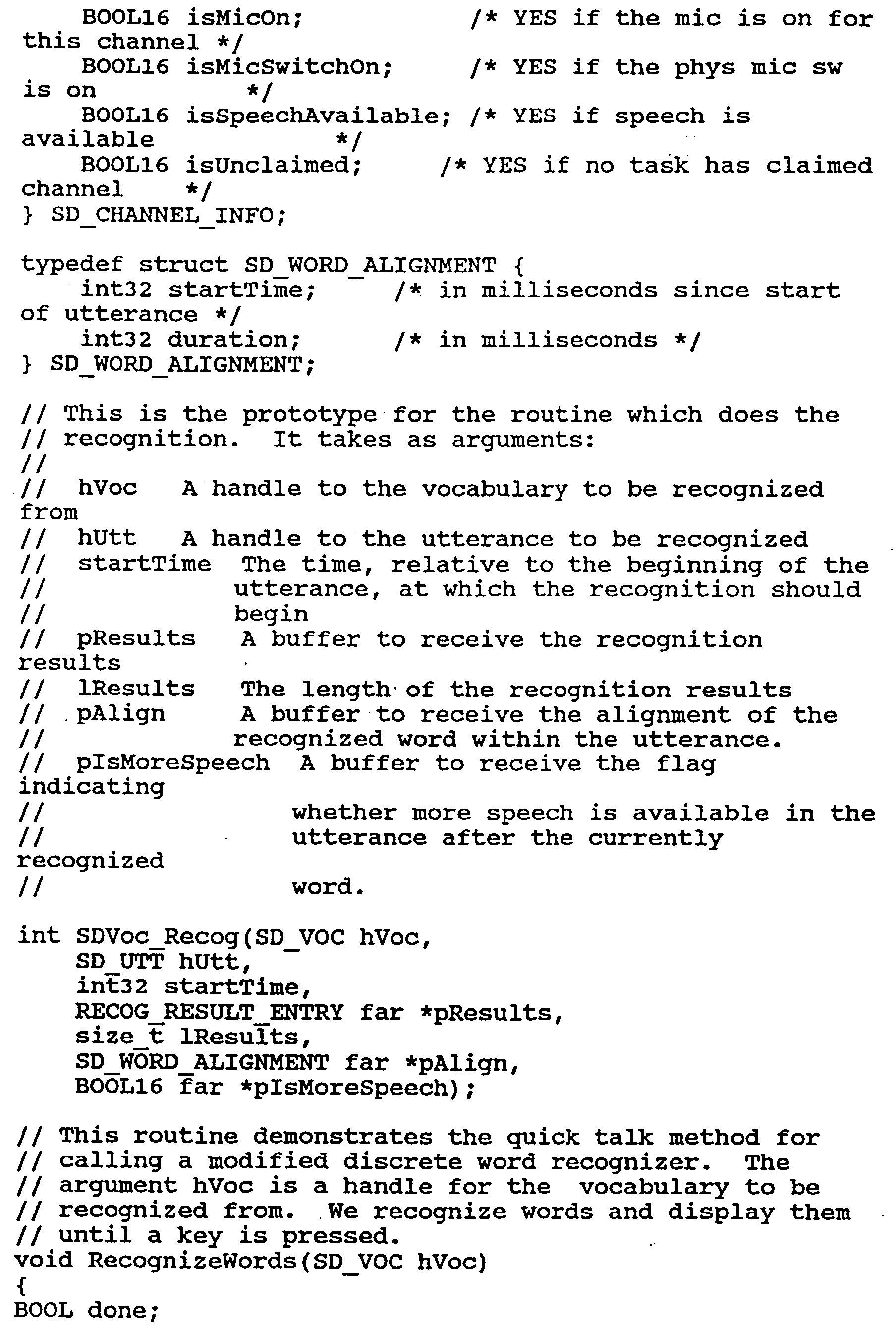

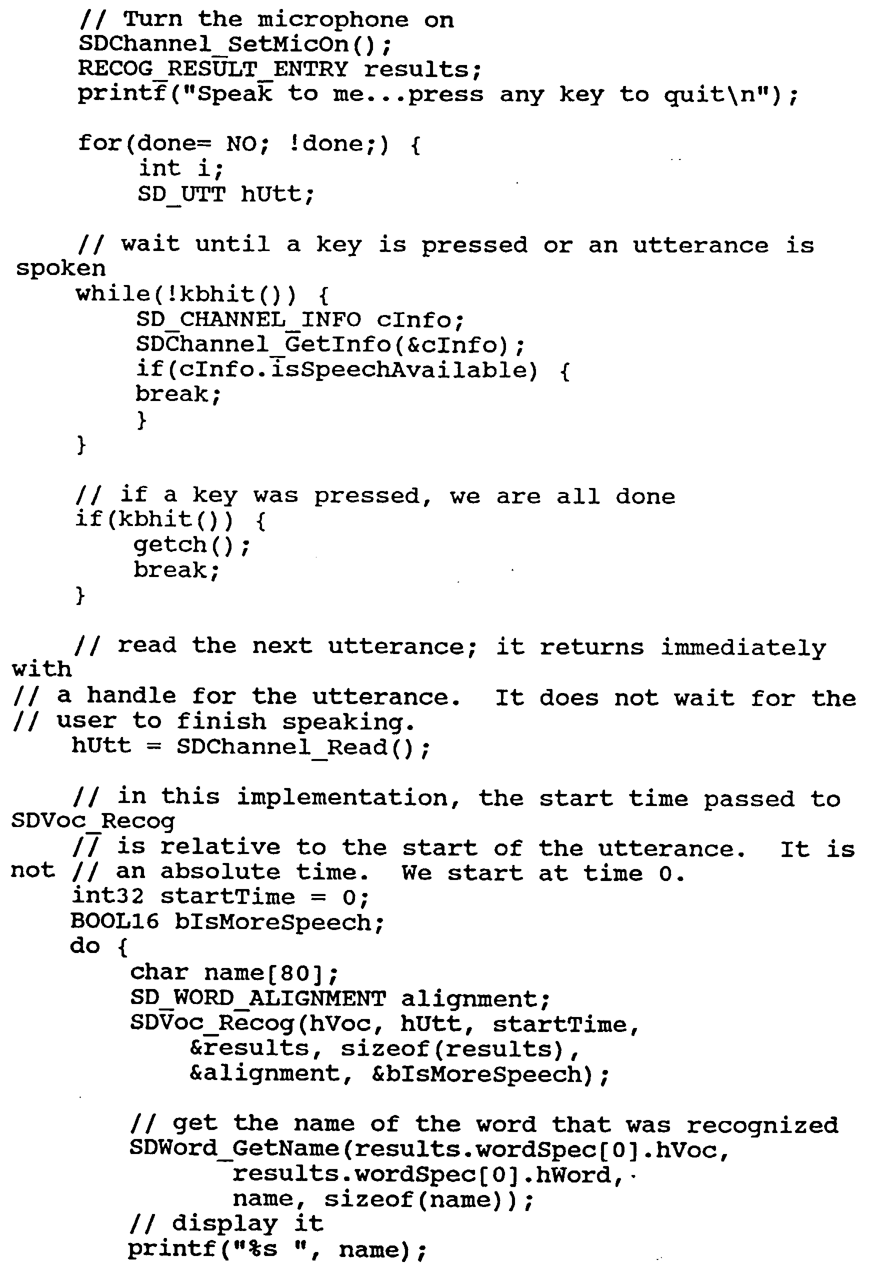

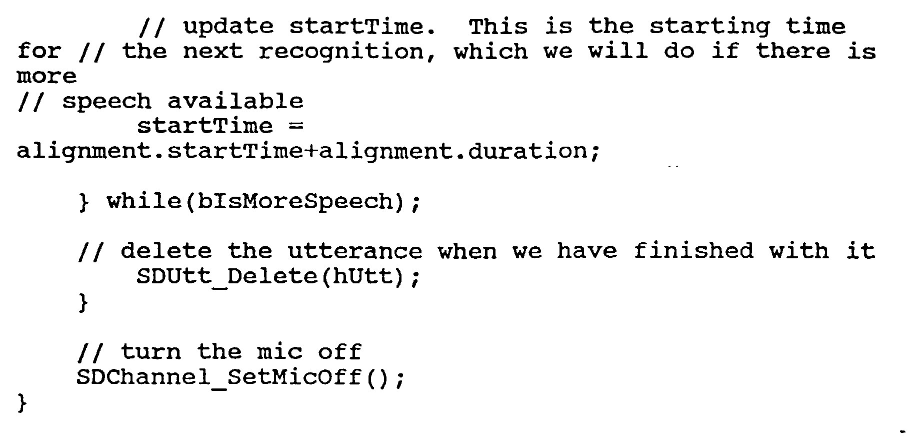

## Claims

1. A method for modified discrete word recognition, comprising:
comparing speech frames of a user utterance, that includes a plurality of speech elements, to speech models; and
upon the occurrence of a predetermined condition, determining, for the utterance, best candidate speech elements by matching speech frames associated with the speech elements to speech models.

2. A method according to Claim 1, further comprising:
comparing any remaining speech frames of the user utterance to speech models; and
upon another occurrence of the predetermined condition, determining, for the utterance, next best candidate speech elements by matching remaining speech frames associated with the speech elements to speech models.

3. A method according to Claim 2, further comprising:
before the comparing step of Claim 2, determining whether any remaining speech frames in the user utterance represent speech, and if so, completing the steps of Claim 2.

4. A method for modified discrete word recognition, comprising:
at times when the speaker separates successive speech elements by pauses longer than a predetermined threshold, performing discrete speech element recognition on each user utterance; and
at other times, recognizing more than one speech element in each user utterance.

5. A method according to Claim 4, wherein said recognizing step includes:
comparing speech frames of each user utterance to speech models; and
upon the occurrence of a predetermined condition, determining, for each utterance, best candidate speech elements by matching speech frames associated with the speech elements to speech models.

6. A method according to Claim 5, further comprising:
determining whether there are any remaining speech frames in the user utterance and whether any remaining speech frames represent speech, and if any remaining speech frames are determined to represent speech,
comparing the remaining speech frames of the user utterance to speech models; and
upon another occurrence of the predetermined condition, determining, for the utterance, next best candidate speech elements by matching remaining speech frames associated with the speech elements to speech models.

7. A method according to Claim 2 or Claim 6, further comprising:
repeating the said comparing and determining steps until all of the speech frames in the user utterance representing speech have been compared to speech models.

8. A method according to any of Claims 1 to 3, or 5 to 7, wherein the predetermined condition is met if a predetermined number of consecutive speech frames match an end node speech model.

9. A method for modified discrete word recognition, comprising:
dividing a user's speech into utterances based on intervening first predetermined conditions appearing between successive utterances; and
subdividing the utterances into speech elements based on a second predetermined condition appearing between successive speech elements.

10. A method according to Claim 9, further comprising:
performing modified discrete speech recognition on any subdivided utterances; and
performing discrete speech recognition on any non-subdivided utterances.

11. A method according to Claims 9 or 10, wherein the first predetermined condition is met if a first predetermined number of consecutive speech frames match an end node speech model.

12. A method according to any of Claims 9, 10 or 11, wherein the second predetermined condition is met if a second predetermined number of consecutive speech frames match an end node speech model.

13. A method according to any preceding claim, wherein the speech elements comprise words.

14. A method according to Claim 12, wherein the speech elements comprise phrases.

15. A modified discrete word recognizer that delivers speech recognition results based on discrete speech recognition of user utterances including single speech elements and modified discrete speech recognition of user utterances including multiple speech elements.

16. A modified discrete word recognizer according to Claim 14, wherein the speech elements comprise words.

17. A modified discrete word recognizer according to Claim 15, wherein the speech elements comprise phrases.
